Europäisches Patentamt

**European Patent Office**

**Office européen des brevets**

(19)

(11) Publication number: **0 163 379**
**A2**

(12)

# EUROPEAN PATENT APPLICATION

(21) Application number: **85302083.2**

(22) Date of filing: **26.03.85**

(51) Int. Cl.⁴: **B 23 K 9/16**
**B 23 K 35/38**

(30) Priority: **31.05.84 US 615841**

(43) Date of publication of application:
**04.12.85 Bulletin 85/49**

(84) Designated Contracting States:
**BE DE FR GB IT SE**

(71) Applicant: **ALLEGHENY LUDLUM STEEL CORPORATION**
**Oliver Building 2000 Oliver Plaza**
**Pittsburgh Pennsylvania 15222(US)**

(72) Inventor: **Aggen, George**
**245 Edgewood Drive**
**Sarver Pennsylvania 16055(US)**

(72) Inventor: **Beigay, Jack Marshall**
**596 Sterling Drive**
**Freeport Pennsylvania 16229(US)**

(74) Representative: **Sheader, Brian N. et al,**
**ERIC POTTER & CLARKSON 27 South Street**
**Reading Berkshire, RG1 4QU(GB)**

(54) Method of welding nitrogen-containing alloys.

(57) A method for improving the weld strength, structure and crevice corrosion resistance of nitrogen-containing alloy weldments by adding nitrogen to the inert gas used for shielding during the welding operation.

EP 0 163 379 A2

Croydon Printing Company Ltd.

0163379

This invention relates to methods of welding having controlled shielding gas composition to enhance the mechanical properties and corrosion resistance of the welded article. Particularly, this invention relates to welding procedures which include adding nitrogen to the shielding gas for welding nitrogen-bearing alloys to improve the weldment properties.

There are known welding procedures for producing weldments and welded articles of strip, sheet, plate and tubing. Such weldments may be made by autogenous welding, such as tungsten inert gas (TIG) or gas tungsten arc welding (GTA), wherein the metal is fused together by melting with an arc produced by a nonconsumable electrode. Another welding practice known as gas metal arc (GMA) or metal inert gas (MIG) involves the use of a consumable welding electrode wherein weld filler metal is used. Plasma arc welding is also used and is analogous to tungsten inert gas welding in that weld filler metal is used, but, instead, the material is melted and fused together by the use of a plasma jet.

The particular welding practice to be used in any situation depends on numerous factors, such as the article shape, size, thickness and composition among other things. For example, TIG welding is generally useful for welding strip or sheet ranging from 0.005 to 0.125 inch (0.013 to 0.32cm), although thicker material can be welded. Plasma arc welding is also generally used for thin sections ranging from 0.001 to 0.25 inch (0.025 to 0.635cm) thick. The MIG welding practice probably is useful from 0.060 to 1.5 inch (0.152 to 3.81cm).

In all of these welding practices, the welding arc or plasma jet is shielded by inert gas. Usually the shielding gas is all argon or mixtures of argon and helium or argon and hydrogen. It is also known, as described in the Metals Handbook, 9th Edition, Vol. 6, Welding, Brazing and Soldering", pages 153 to 224, that other gases may be mixed with inert gas. For example, for GMA welding, carbon dioxide and carbon dioxide-oxygen may be used for the purpose of improving arc behavior and metal flow characteristics. Up to 2% oxygen in the shielding gas is known to improve arc stability and appears useful for welding stainless steel. Nitrogen is described useful for welding deoxidized copper in Great Britain when the shielding gas is all or substantially all nitrogen. Nitrogen is also described as being detrimental to arc stability in TIG welding because of attack on the electrodes. Nitrogen has also been reported as used experimentally to control the percent of delta ferrite formed in stainless steels, such as AISI Type 304.

In welding operations of the TIG, MIG and plasma arc type, the mechanical properties and corrosion resistance of the welds may be inferior to the base metal. Autogenous welds of corrosion-resistant stainless steels are usually significantly less corrosion resistant than the base metal. This is usually attributed to segregation during solidification, i.e., the newly solidified crystals are heterogenous in composition. It is common practice to use overmatching filler metal, which is more corrosion resistant, to avoid the inferior welds; however, it is not always practical to weld with filler metal.

Similarly, in welding operations of the above-described type when used with nitrogen-containing alloys, the weld and sometimes the adjacent heat-affected zone (HAZ) do not have the same properties. Specifically, the weld zone and sometimes the HAZ are less resistant to crevice corrosion than the remainder of the article. In addition, the weld shows a decrease in strength and apparent ductility relative to the remainder of the weldment. Nitrogen loss from the alloy during the fusing operation incident to welding contributes to the degradation of properties in the weld zone beyond that attributed to segregation. In duplex alloys, such nitrogen loss may also result in formation of delta ferrite in the weld in excess of that due to high temperature of the welding practice alone. The nitrogen of 0.15% or more in the stainless steel contributes to strength, ductility and corrosion resistance. Specifically, nitrogen is added to the stainless steel for the purpose of increasing the strength and crevice corrosion resistance, to control the amount of delta ferrite and to retard the formation of brittle second phases, such as sigma and chi. The formation of intermetallic phases impairs corrosion resistance and ductility.

It is an object of the present invention to improve the mechanical properties, corrosion resistance and microstructure of the welds of welded articles.

It is a further object to minimize the adverse effects of nitrogen loss in the welds of nitrogen-bearing alloys.

It is an object to improve the properties of welded articles including strip, sheet, plate and tubing.

It is an object of the present invention to provide a method for welding nitrogen-containing stainless steels wherein the nitrogen loss during welding is compensated for to maintain weld strenght, weld structure and crevice corrosion resistance in the weld zone.

In accordance with the present invention a method is provided for improving the weld strength, weld structure and crevice corrosion resistance of a nitrogen-containing alloy weldment. The weldment is shielded with an inert gas during welding and includes adding nitrogen to the inert gas. Nitrogen may be introduced in amounts of 2 to 25% by weight of the shielding gas. Nitrogen-containing stainless steel alloys may be so welded. The nitrogen

may also be added to improve the microstructure, 0163379
including controlling the amount of delta ferrite in the weld.

Broadly, the invention includes adding nitrogen gas to the inert gas used for shielding during welding. The present invention should be useful in any conventional welding procedures which use shielding gases, whether the procedures are autogenous or require the use of weld filler metal.

The nitrogen is added to the inert gas in accordance with the invention within the range of 2 to 25% percent, by weight, of the shielding gas. Preferably, the nitrogen may be present within the range of 2.5% up to 10%. The practical upper limit of nitrogen may be about 10% in view of the welding arc stability and performance. More preferably, nitrogen may be added within the range of 5 to 15%.

The manner in which the nitrogen is added to the shielding gas does not appear critical. The nitrogen may be premixed with the shielding gas or be metered separately to the welding arc.

The shielding gas may be a conventional inert gas such as argon, helium or mixtures thereof of argon, hydrogen or mixtures thereof. The shielding gas may also include other gases such as oxygen, carbon dioxide or mixtures thereof as is known in the art.

The present invention appears useful for welding any alloys containing a significant amount of nitrogen which is an integral constituent for providing the desired properties of the alloys. The present invention has been found particularly useful in welding nitrogen-bearing stainless steel alloys having nitrogen to provide the structure, mechanical properties or corrosion resistance of the steel. Typically, such stainless steels may contain about 0.15%, by weight, nitrogen or more, and may range from about 0.15 to 0.25%.

In order to more completely understand the present

invention the following examples are presented.

## Example 1

As a specific example of the practice of the invention, weldment samples were produced from the following alloy composition in weight percent.

| Heat No. | C | Mn | P | S | Si | |
|---|---|---|---|---|---|---|
| 876733 | .02 | 1.63 | .021 | .002 | .43 | Cont'd |

| Cr | Ni | Mo | N | Ce | Fe |
|---|---|---|---|---|---|
| 20.26 | 24.73 | 6.30 | .19 | .026 | Bal |

From the above composition coils of stainless steel strip were obtained from mill annealed coil product. Coil No. 1 has strip thickness of about 0.055 inch (0.14 cm). Coil No. 2 has a thickness of 0.047 inch (0.12 cm) and is a mill bright annealed coil product.

Tensile and corrosion coupons were prepared from the as-annealed strip of Coil No. 1. The strip was autogenously tungsten inert gas (TIG) welded with shielding gases of (1) pure argon, (2) argon with 2.5% nitrogen, (3) argon with 5% nitrogen, (4) argon with 10% nitrogen, and (5) argon with 20% nitrogen. Tensile Tests of the as-annealed specimens were transverse to the rolling direction and those from the as-welded coupons were transverse to the weld. The 1 by 2 inch (25.4 by 50.8mm) corrosion coupons of the as-welded specimens were prepared with the welds centrally located parallel to the 2 inch (50.8mm) dimension. These coupons were crevice-corrosion tested (according to ASTM G-48 - Practice B) to establish the critical crevice corrosion temperatures (CCCT). The CCCT is the temperature at which crevice corrosion becomes apparent after a 72-hour test in 10% $FeCl_3$ in accordance with this practice. Higher CCCT demonstrates improved crevice corrosion resistance.

The room temperature, transverse tensile properties of the annealed base metal and the as-welded samples were as follows:

Table I

| Condition | Gage Inch (cm) | 0.2% Yield Strength (ksi) | Ult. Tensile Strength (ksi) | Elongation, Percent in | | EoX $10^{-6}$ psi |
|---|---|---|---|---|---|---|
| | | | | 0.5 in. (1.3 cm) | 2 in. (5.08 cm) | |
| Mill Annealed | .056 (0.14) | 58.8 | 120.3 | -- | 37.3 | 28.0 |
| Welded, Pure Ar | .056 (0.14) | 60.6 | 99.9 | 25.0 | 13.3 | -- |
| Ar + 2.5% N | .056 (0.14) | 59.8 | 107.2 | 29.0 | 15.8 | -- |
| Ar + 5% N | .056 (0.14) | 60.6 | 109.2 | 33.5 | 18.5 | -- |
| Ar + 10% N | .053 (0.13) | 57.1 | 108.3 | * | 20.0 | -- |
| AR + 20% N | .052 (0.13) | 58.1 | 111.1 | * | 22.3 | -- |

*Tests were in 0.25 inch (0.64 cm) gage length with values of 38.0 and 50.0%, respectively.

For Coil No. 1, the critical crevice corrosion temperature (CCCT) for the various conditions were as follows:

Mill Annealed : About $100^{\circ}F$ ($37.8^{\circ}C$)

Welded-Pure Ar : Between 85 and $90^{\circ}F$ (29.4 and $32.2^{\circ}C$)

Welded-Ar & 2.5% N: About $90^{\circ}F$ ($32.2^{\circ}C$)

Welded-Ar & 5% N : Between 95 and $100^{\circ}F$ (35 and $37.8^{\circ}C$)

As may be seen from the above-reported data, introducing nitrogen into the shielding gas improves the apparent as-welded tensile properties as well as the crevice corrosion resistance, which is demonstrated by the CCCT values. All of the welded samples fractured within the weld. The increase in tensile strength and apparent increase in enlongation with nitrogen used in the shielding gas occurred because the weld strength increased and the base metal contributed to elongation. Up to 20% N in the argon shielding gas shows modest increases in strength. Higher nitrogen up to 25% may also be possible.

Specifically, as may be seen from the above-reported CCCT values, the samples to which 2.5% nitrogen have been added to the argon shielding gas during welding exhibited a higher critical temperature than those welded with pure argon as the shielding gas. The samples to which 5% nitrogen has been added to the argon shielding gas during welding exhibited a critical temperature comparable to the mill annealed product and thus comparable to the base metal unaffected by the welding operation. The addition of 5% nitrogen provides crevice corrosion in the welds that is equivalent, or nearly so, to the base metal.

For Coil No. 2, the corrosion coupons were prepared in the manner for Coil No. 1. The CCCT for various conditions were determiend for the bright mill annealed surface and for a surface treated by blasting with an abrasive after welding. The reason for surface treating was to remove light oxides formed during welding. The CCT for various conditions were as follows:

Bright Anneal Surface

Mill Annealed        : Between 110 and 115°F (43.3-46.1°C)

Welded, Pure Ar    : Between 90 and 95°F (32.2-35°C)

Welded, Ar + 5% N  : Between 95 and 100°F (35-37.8°C)

Surface Blasted After Welding

Welded, Pure Ar    : Between 95 and 100°F (35-37.8°C)

Welded, Ar + 10% N : Between 95 and 100°F

Welded, Ar + 20% N : Between 95 and 100°F

The mill annealed base metal had a higher CCCT than Coil No.1, possibly because of a higher annealing temperature during production. The above data shows that the addition of 5% nitrogen to the argon shielding gas during welding increased the CCCT, thus improving the crevice corrosion resistance of the untreated surface. As for the treated welded strip, the nitrogen addition is shown to be beneficial although the effect is smaller. The attack at 100°F was confined to the welds in all the surface blasted samples; however, the attack was much greater in the sample welded only with pure argon. The 10% and 20% nitrogen addition reduced the level of attack.

### Example II

As a specific example of the practice of the invention with another nitrogen-bearing alloy, weldment samples were produced from the following alloy composition in weight percent:

| Alloy | C | Mn | P | S | Si | Cr | Ni | Mo | N | Fe |
|-------|------|-----|------|------|-----|-------|------|------|-----|------|
| SAF 2205 | .019 | .67 | .010 | .007 | .42 | 22.26 | 5.82 | 3.20 | .19 | Bal. |

**0163379**

From the above composition, a coil of duplex stainless steel strip was obtained from mill product containing approximately 50% austenite and 50% delta ferrite. The strip had a thickness of about 0.056 inch (0.14 cm). The tensile and corrosion coupons were prepared from the strip in the same manner as in Example I. Additionally, corrosion coupons were prepared and intergranular corrosion tested according to ASTM A763-X practice in boiling 50% $Fe_2SO_4$.

The room temperature, transverse tensile properties of the base metal and the as-welded samaples were as follows in Table II:

## Table II

| Condition | Gage Inch (cm) | 0.2% Yield Strength ksi | Ult. Tensile Strength ksi | Elongation Percent in | | Comments |
|---|---|---|---|---|---|---|
| | | | | 0.25 in. (0.64 cm) | 2 in. (5.08 cm) | |
| Base Metal | .058 (0.15) | 95.7 | 120.2 | -- | 26.5 | -- |
| Welded, Pure Ar | .057 (0.14) | 88.6 | 108.4 | 41.0 | 9.5 | Broke in weld |
| Welded, Ar + 5% N | .054 (0.14) | 91.7 | 112.6 | 52.0 | 12.5 | Broke in weld |
| Welded, Ar + 10% N | .054 (0.14) | 90.2 | 111.6 | 50.0 | 14.8 | Broke in fusion line |
| Welded, Ar + 20% N | .055 (0.14) | 93.9 | 114.1 | 42.0 | 17.8 | Broke in base metal |

The critical crevice corrosion temperatures (CCCT) and intergranular corrosion (IC) rate for various conditions were as follows:

| | CCCT | IC Rate in/month | IC Rate mm/annum |
|---|---|---|---|
| Base Metal | Between 60-65°F(16-18°C) | .00203 | 0.62 |
| Welded Pure Ar | About 60°F (16°C) | .00174 | 0.53 |
| Welded Ar+5% N | Between 65-72°F(18-22°C) | .00162 | 0.49 |
| Welded Ar+10% N | Between 80-85°F(27-29°C) | .00143 | 0.44 |
| Welded Ar+20% N | Between 80-85°F(27-29°C) | .00154 | 0.47 |

As shown by the data, adding nitrogen to the shielding gas improves the apparent as-welded tensile properties and corrosion resistance. For welding with all argon and argon with 5% nitrogen, the weld samples fractured in the weld. At 10% nitrogen in the shielding gas, the fracture was in the fusion line. At 20% nitrogen additions, the fractures occurred wholly in the base metal heat affected zone (HAZ). Accordingly, the transverse elongations over 0.25 inch (0.64 cm) (across the weld) show decreases when the failure occurs outside the weld. This also means the weld deposit is at least as strong as the base metal with the 20% nitrogen addition.

As for corrosion testing, the effect of introducing nitrogen is clearly beneficial. It is not completely understood why the welded samples, particularly with nitrogen in the shielding gas, exhibit better corrosion resistance than the base metal as measured by CCCT and IC rate. Possibly, a corrosion phenomenon called "end grain attack", which is accelerated subsurface attack in the longitudinal direction (probably segregation related), may be an explanation. Furthermore, with such a duplex alloy, nitrogen additions to the shielding gas could be useful to control weld structures. For example such

nitrogen may avoid excessive delta ferrite which could harm toughness, strength and corrosion resistance.

As was an object of the invention, conventional welding using shielding gas can provide welded articles having improved mechanical properties, corrosion resistance and structure.

## Claims

1. A method of improving the weld strength, weld ductility and corrosion resistance of a nitrogen-containing alloy weldment, which weldment is shielded with inert gas during welding, characterised in that said method comprises adding nitrogen to said inert gas.

2. A method according to claim 1, wherein said nitrogen-containing alloy is a stainless steel.

3. A method according to claim 2, wherein the stainless steel contains nitrogen within the range of 0.15 to 0.25%, by weight.

4. A method according to claim 1, 2 or 3, wherein nitrogen is added to the inert gas in an amount within the range of 2 to 25%, by weight, of the shielding gas.

5. A method according to claim 4, wherein nitrogen is added to said inert gas in an amount within the range of 2.5 to 20% by weight of the shielding gas.

6. A method according to any other of the preceding claims, wherein said shielding gas comprises argon, helium or hydrogen or a mixture of two or more thereof.

7. A method according to claim 6, wherein the shielding gas includes oxygen or carbon dioxide or a mixture thereof.

8. A method of improving the weld strength, structure and crevice corrosion resistance of a nitrogen-containing stainless steel weldment which is shielded with inert gas during welding, characterised in that said method comprises adding nitrogen to said inert gas in an amount within the range of 2 to 25%, by weight, of the shielding gas.

9. A method according to claim 8, wherein said inert gas is argon, helium or hydrogen or a mixture of two or more thereof.

10. A method according to claim 8, wherein said inert gas is argon.

11.  A method according to claim 8, 9 or 10, wherein 0163379 the stainless steel contains nitrogen within the range of 0.15 to 0.25%, by weight.

12.  A method according to any one of claims 8 to 11, wherein nitrogen is added to the inert gas within the range of 2.5 to 20% by weight.

13.  A method according to any one of claims 8 to 12, wherein nitrogen is added to improve the microstructure, including delta ferrite content, of the weld.